# EUROPÄISCHE PATENTSCHRIFT

(11) **EP 0 788 283 B1**
(45) Veröffentlichungstag und Bekanntmachung des Hinweises auf die Patenterteilung: **19.03.2008**
(21) Anmeldenummer: 97100632.5
(22) Anmeldetag: 16.01.1997
(51) Int. Cl.: H04Q 3/00

(54) **Verfahren zum Konvertieren von unterschiedliche Formate aufweisenden Nachrichten in Kommunikationssystemen**
Method for converting information having different formats in a communications system
Procédé de conversion des informations comportant des formats différents dans un système de communications

(30) Priorität: 31.01.1996 DE 19603474
(43) Veröffentlichungstag der Anmeldung: 06.08.1997
(73) Patentinhaber: SIEMENS AKTIENGESELLSCHAFT, 80333 München (DE)
(72) Erfinder: Steinbach, Holger, Dipl.-Ing., 33106 Paderborn (DE)

(56) Entgegenhaltungen:
- EP-A- 0 203 614
- US-A- 5 077 735
- US-A- 5 420 916

## Beschreibung

In öffentlichen oder privaten Kommunikationsnetzen kommunizieren Kommunikationssysteme mit Hilfe von standardisierten Signalisierungsprozeduren- beispielsweise Signalisierungsprozedur Nr.7 - oder speziellen Signalisierungsprozeduren für private Kommunikationsnetze - beispielsweise Cornet der Fa. Siemens. Insbesondere in privaten Kommunkationsnetzen werden die auszutauschenden Signalisierungs- und Nachrichteninformationen über Festverbindungen - beispielsweise eine Signalisierungsprozedur Nr. 7 - Festverbindung übermittelt, wobei in die Signalisierungsinformationen Nachrichten eingefügt sind, mit deren Hilfe die Kommunikationssysteme vermittlungstechnisch gesteuert werden. Für die Übernahme und ein Aufbereiten von Nachrichten ist in den Kommunikationssystemen zumindest eine interne Nachrichtenschnittstelle vorgesehen, wobei die Formate der über die interne Nachrichtenschnittstelle übermittelten Nachrichten bzw. Nachrichtenelemente in Abhängigkeit vom Release, d.h. vom Aktualisierungsgrad des jeweiligen Kommunikationssystems abweichen können; die Informationsinhalte der Nachrichten bleiben jedoch gleich. Diese unterschiedlichen Formate ergeben sich in Kommunikationssystemen insbesondere bei umfangreichen Erweiterungen zur Steuerung von zusätzlichen Leistungsmerkmalen, wobei im Kommunikationssystem die programmtechnischen Änderungen durch eine Aktualisierungs- bzw. Releaseinformation angezeigt werden.

Aus der Druckschrift EP-A-0 203 614 Masuda et al. "Inter-Network Connection System" ist eine Anordnung aus zwei Kommunikationsnetzen bekannt, die über ein Verbindungs-Netzwerk miteinander verknüpft sind. Das Verbindungs-Netzwerk weist dabei Verbindungsknoten (Gateways) zu den Kommunikationsnetzen auf. In den Verbindungsknoten sind dabei Tabellen gespeichert, die Bezeichner ("Identifier") enthalten, die in den verknüpften Kommunikationsnetzen verwendet werden. Anhand der Einträge in den Tabellen werden in den Nutzdaten und in den Signalisierungsnachrichten, die zwischen den Kommunikationsnetzen über die Verbindungsknoten ausgetauscht werden, die entsprechenden Bezeichner jweils durch diejenigen des jeweils anderen Kommunikationsnetzes ersetzt.

Die der Erfindung zugrundeliegende Aufgabe besteht darin, ein Verfahren derart auszugestalten, daß in Signalisierungsinformationen eingebettete Nachrichten mit unterschiedlichen Formaten zwischen Kommunikationssystemen austauschbar sind. Die Aufgabe wird durch die Merkmale des Patentanspruchs 1 gelöst.

Der wesentliche Aspekt des erfindungsgemäßen Verfahrens ist darin zu sehen, daß in zumindest einer Konfigurationstabelle kommunikationssystemspezifische Informationen gespeichert sind und in nachrichtenartenindividuellen Konvertierungstabellen Konvertierungsvorschriften angegeben sind.

In den Kommunikationssystemen werden beim Empfang oder beim Senden einer Nachricht die kommunikationssystemspezifischen Informationen der am jeweiligen Nachrichtenaustausch beteiligten Kommunikationssysteme ermittelt und bei unterschiedlichen kommunikationssystemspezifischen Informationen wird mit den in den Konfigurationstabellen gespeicherten kommunikationssystemspezifischen Informationen in Abhängigkeit von der Art der Nachricht eine Konvertierungstabelle ermittelt, nach deren Konvertierungsvorschriften die Nachricht konvertiert wird. Mit Hilfe der erfindungsgemäßen Konfigurations- und Konvertierungstabellen wird eine Konvertierung bzw. Kompatibilität von unterschiedlichsten Formaten von Nachrichten und damit unterschiedlichsten internen Nachrichtenschnittstellen mit geringstem programmtechnischen Aufwand erreicht.

Die kommunikationssystemspezifische Information ist vorteilhaft durch eine die Aktualisierung des jeweiligen Kommunikationssystems anzeigende Releaseinformation repräsentiert - Anspruch 2. Diese Releaseinformation zeigt den aktuellen programmtechnischen und funktionellen Zustand eines Kommunikationssystems in einem Kommunikationsnetz an und damit auch in welches Format Nachrichten von der internen Nachrichtenschnittstelle, insbesondere Signalisierungsnachrichten, für eine Übermittlung über einen zwischen Kommunikationssystemen geführten Signalisierungskanal konvertiert werden müssen.

Die Konvertierungstabellen werden besonders vorteilhaft mit Hilfe einer ersten und von zweiten Konfigurationstabellen ermittelt - Anspruch 3. Hierbei ist in einer eine erste Konfigurationstabelle repräsentierende Releasetabelle jeweils einer den Aktualisierungsgrad von Kommunkationssystemen im Kommunkationsnetz anzeigenden Releaseinformation eine erste Tabelleninformation zugeordnet, die jeweils eine zweite Konfigurationstabelle reprasentierende Nachrichtenartentabelle anzeigt. In den Nachrichtentabellen ist jeweils einer den Nachrichtentyp anzeigenden Typeninformation eine zweite Tabelleninformation zugeordnet, die jeweils eine Konvertierungstabelle angibt. Durch diese Tabellenkonzeption wird eine hohe Flexibilität hinsichtlich der Konvertierung von Nachrichten unterschiedlichsten Typs und mit unterschiedlichen Formaten erreicht.

In den Konvertierungstabellen sind jeweils der Umfang und die Art von Nachrichtenelemten angegeben, die aus einer zu konvertierenden Nachricht zu entfernen oder einzufügen sind. Für dieses Einfügen und Entfernen von Nachrichtenelementen sind die betroffenen Positionen in den Nachrichten durch entsprechende Offsetinformationen anzeigt - Anspruch 4. Für ein Entfernen oder Einfügen eines oder mehrerer Nachrichtenelementes aus der bzw. in die Nachricht an den betroffenen Nachrichtenelementeposition ist jeweils ein separater Bearbeitungsauftrag in den Konvertierungstabellen vorgesehen, dem die entsprechenden Bearbeitungs-, Offset-, Korrektur-, Funktions- und Parameterinformationen zugeordnet sind.

Die Reihenfolge der Bearbeitungseinträge entspricht vorteilhaft der Reihenfolge der zu bearbeitenden Nachrichtenelementepositionen - Anspruch 5. Dies bedeutet, daß die Bearbeitun gseinträge entsprechend der aufsteigender Reihenfolge der zu korrigierenden - Einfügen oder Entfernen - Nachrichtenelementepositionen in die jeweilige Konvertierungstabelle eingetragen werden. Diese Bearbeitungseintrags-Reiherfolge gewährleistet, daß durch die im jeweiligen Bearbeitungseintrag angegebenen Informationen die einzelnen Nachrichtenelementepositionen korrekt adressiert werden. Basierend auf dieser Bearbeitungseintrags-Reihenfolge werden prinzipiell die Konverierungstabellen beim Senden in einer Tabellenrichtung und beim Empfang von Nachrichten in entgegengesetzter Tabellenrichtung abgearbeitet.

Gemäß einer weiteren vorteilhaften Ausgestaltung des erfindungsgemäßen Verfahrens sind die Konvertierungstabellen derart strukturiert, daß die jeweilige Konvertierungstabelle beim Senden einer zu konvertierenden Nachricht in einer Tabellenrichtung und bei beim Empfangen einer zu konvertierenden Nachricht in der entgegengesetzten Tabellenrichtung abgearbeitet wird, wobei bei der Abarbeitung in entgegengesetzter Tabellenrichtung die Bearbeitungsinformationen invers verwendet werden - Anspruch 6. Die Bearbeitungsinformation wird bei einer vorhandener Einfüge- in eine Entferneninformation und umgekehrt konvertiert. Durch diese Konvertierungstabellenkonzeption und der Konvertierung der Bearbeitungsinformationen kann der programmtechnische Aufwand für eine Realisierung einer Konvertierung von Nachrichten mit unterschiedlichen Formaten zusätzlich reduziert werden, da jeweils eine Konvertierungstabelle sowohl beim Senden als auch beim Empfang von zu konvertierenden Nachrichten benutzt wird.

Bei komplexen Konvertierungsvoraussetzungen sind vorteilhaft zum Konvertieren einer zu sendenden oder zu empfangenen Nachricht unterschiedliche Konvertierungstabellen vorgesehen, wobei die Konvertierungstabellen in entgegengesetzten Tabellenrichtungen abgearbeitet werden - Anspruch 7. Die Bearbeitungsinformationen werden hierbei wie angegeben verwendet.

Im folgenden wird das erfindungsgemäße Verfahren anhand von drei zeichnerischen Darstellungen näher erläutert. Dabei zeigen
- FIG 1: die erfindungsgemäße Tabellenstruktur,
- FIG 2: ein Beispiel einer Konvertierungstabelle und
- FIG 3: eine Nachricht sowie durch die beispielhafte Konvertierungstabelle konvertierte Nachrichten.

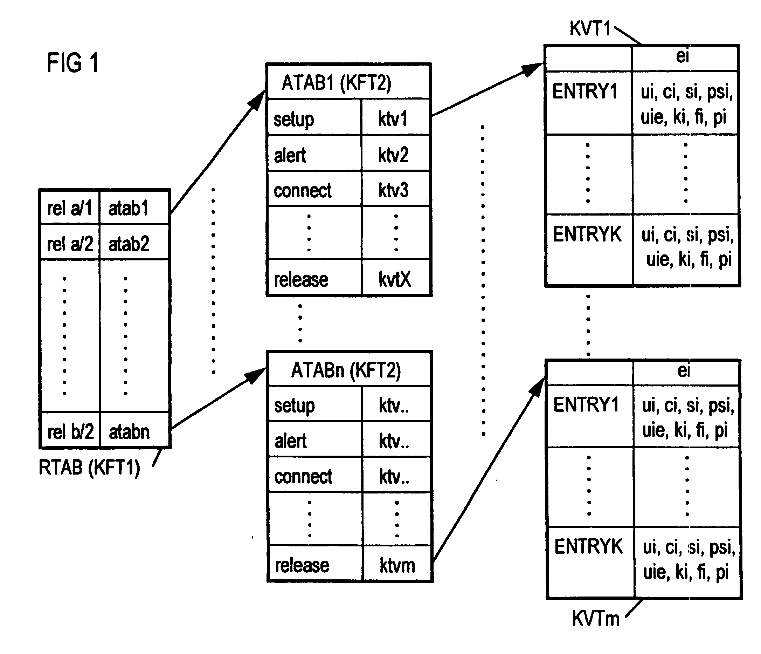

FIG 1 zeigt eine dem erfindungsgemäßen Verfahren zugrundeliegende Tabellenstruktur, die in einem Kommunikationssystem - nicht dargestellt - für eine Konvertierung von Nachrichten gespeichert ist. In einer eine erste Konfigurationstabelle KFT1 repräsentierenden Releasetabelle RTAB ist für jeden in einem Kommunikationsnetz, beispielsweise in einem privaten Kommunikationsnetz, vorgesehenen Aktualisierungsgrad eines Kommunikationssystems eine Releaseinformation rel a/1.. b/2 gespeichert. Durch diese Releaseinformation rel a/1.. b/2 ist auch angegeben, welche interne Nachrichtenschnittstelle hinsichtlich der Formate der Nachrichten in dem jeweiligen Kommunikationssystem realisiert ist, d.h. in welchem Format die Nachrichten in einem Signalisierungskanal gebildet und empfangen werden. In der Fachwelt wird der Aktualisierungsgrad eines Kommunikationssystems mit Release eines Kommunikationssystems bezeichnet, wobei durch den Release insbesondere die aktuelle programmtechnische Version eines Kommunikationssystems, bezogen auf das Ausführungsbeispiel insbesondere hinsichtlich der internen Nachrichtenschnittstelle, angegeben ist.

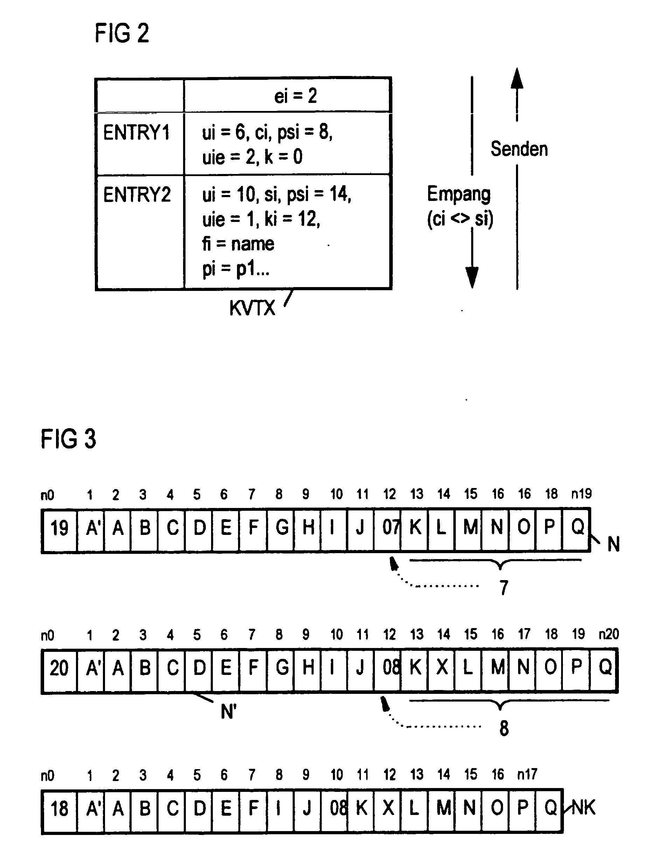

Jeweils einer Releaseinformation rel a/1.. b/2 ist eine erste Tabelleninformation atab1..n zugeordnet. Diese ersten Tabelleninformationen atab1..n zeigen - durch einen Pfeil angedeutet - jeweils auf eine zweite Konfigurationstabelle KFT2 repräsentierende Nachrichtenartentabellen ATAB1..n. In den Nachrichtenartentabellen ATAB1..n sind jeweils Typeninformationen setup.. eingetragen, die die vorkommenden Arten von Nachrichten N - siehe FIG 3 - für den jeweiligen Release anzeigen. In Signalisierungsinformationen, die im Rahmen einer Signalisierung zwischen Kommunikationssystemen verwendet werden, sind beispielsweise Arten von Nachrichten wie Verbindungsaufbaunachrichten (setup), Rufnachrichten (alert), Durchschaltenachrichten (connect) und Auslösenachrichten (release) vorgesehen. Jeweils einer die Art einer Nachricht anzeigenden Typeninformation setup... ist jeweils eine zweite Tabelleninformation kvt1...m zugeordnet. Diese zweite Tabelleninformation kvt1...m zeigt - durch Pfeile angedeutet - jeweils eine Konvertierungstabelle KVT1...m an.

In jeder der Konvertierungstabellen KVT1...m sind 1 bis k Einträge ENTRY1...K angegeben und in jeden Kopf einer Konvertierungstabelle KVT1...m ist eine die Anzahl der Einträge anzeigende Eintragsinformation ei eingetragen. Bei den Einträgen ENTRY1..K handelt es sich um Bearbeitungseinträge, d.h. für jeden Bearbeitungsvorgang - beispielsweise Einfügen eines zusätzlichen Nachrichtenelementes n - siehe FIG 3 - ist ein Eintrag ENTRY1..K vorgesehen.

Jedem der Einträge ENTRY1..K ist eine den Umfang eines Bearbeitungseintrages ENTRY1..K anzeigende Mengeninformation ui zugeordnet. Der Umfang eines Bearbeitungsauftrages ENTRY1..K ist beispielsweise in Anzahl von Bytes angegeben. Des weiteren ist jedem Bearbeitungseintrag ENTRY1..K eine Bearbeitungsinformation ci, si zugeordnet. Durch diese Bearbeitungsinformation ci, si wird angezeigt, ob Nachrichtenelemente n aus der Nachricht N entfernt (ci) oder Nachrichtenelemente in die Nachricht N eingefügt (si) werden. Eine ebenfalls jedem Bearbeitungseintrag ENTRY1..K zugeordnete Offsetinformation psi zeigt die Nachrichtenelementeposition an, bei der Nachrichtenelemente n eingefügt oder entfernt werden. Den Umfang einzufügender oder zu entfernender Nachrichtenelemente n ist durch eine Elementeumfanginformation uie repräsentiert. Der Umfang einzufügender oder zu entfernender Nachrichtenelemente n wird durch die Anzahl von einzufügenden bzw. zu entfernenden Bytes angegeben. Mit Hilfe einer weiteren, jeweils einem Bearbeitungseintrag ENTRY1..K zugeordneten Korrekturinformation ki wird eine Korrekturposition nach einer vollständigen Bearbeitung einer Nachricht angegeben. Ebenfalls jedem Bearbeitungseintrag ENTRY1..K ist eine Funktionsinformation fi und eine Parameterinformation pi zugeordnet. Die Funktionsinformation fi stellt eine Initialisierungsfunktion für die an der Nachrichtenelementeposition einzufügenden Nachrichtenelemente n dar. In den Parameterinformationen pi sind die Parameter p1.. für die Initialisierungsfunktion enthalten, wobei die Anzahl der Parameter p1.. variabel ist.

Für den Kommunikationsaustausch zwischen Kommunikationssystemen ist in jede Nachrichten N enthaltende Signalisierungsinformation - nicht dargestellt - eine den Aktualisierungsgrad des jeweiligen Kommunikationssystem anzeigende Releaseinformation rel a/1.. b/2 eingefügt. Soll eine Nachricht in einem Kommunikationssystem für eine Übermittlung an ein weiteres Kommunikationssystem gebildet werden oder werden von einem weiteren Kommunikationssystem im Rahmen einer Signalisierungsinformationsübertragung Nachrichten N empfangen, so wird überprüft, ob eine Konvertierung der Nachrichten N erforderlich ist. Die Überprüfung erfolgt anhand der Releaseinformationen rel a/1.. b/2, die in jedem Kommunikationssystem eines Kommunikationsnetzes gespeichert sind. Da das jeweilige Kommunikationssystem seinen eigenen Aktualisierungsgrad bzw. Release kennt, wird überprüft, ob das Kommunikationssystem, von dem eine Nachricht empfangen wird oder das Kommunikationssystem, an das eine Nachricht zu senden ist, den gleichen Akualisierungsgrad bzw. Release aufweist. Der Release bzw. die entsprechende Releaseinformation rel a/1.. b/2 wird aus einer nicht dargestellten Tabelle ermittelt, in der jedem in einem Kommunikationsnetz vorkommenden Kommunikationssystem eine den aktuellen Aktualisierungsgrad bzw. Release repräsentierende Releaseinformation rel a/1.. b/2 zugeordnet ist. Diese Tabelle wird nach jedem Aktualisieren eines Kommunikationssystems durch nicht dargestellte administrative Vorgänge aktualisiert.

Wird eine zur eigenen unterschiedliche Releaseinformation rel a/1.. b/2 ermittelt, so wird mit Hilfe dieser Releaseinformation rel a/1.. b/2 in der Releasetabelle RTAB die zugeordnete erste Tabelleninformation atab1...n ermittelt, durch die eine Nachrichtenartentabelle ATAB1...n zur weiteren Ermittlung bestimmt ist. In dieser ist je nach Art der Nachricht, d.h. je nach Nachrichtenarteninformation setup... eine zweite Taelleninformation kvt1...m zugeordnet, durch die die zu benutzende Konvertierungstabelle KVT1...m angegeben ist. Bei einer aktuell zu konvertierenden Nachricht N wird durch Ermitteln der in der Nachricht N enthaltenen Nachrichtenarteninformation setup.. überprüft, um welchen Nachrichtentyp es sich handelt und in Abhängigkeit von der ermittelten Nachrichtenart bzw. Nachrichtenarteninformationen SETUP.. wird die zugeordnete Konvertierungstabelle KVT1..m ermittelt. Die für die Konvertierung ermittelte Konvertierungstabelle KVT1...m wird für das Konvertieren einer Nachricht N beim Senden in einer Tabellenrichtung und beim Konvertieren einer Nachricht N beim Empfangen in entgegengesetzter Tabellenrichtung abgearbeitet, d.h. die Nachrichten werden mit einer einzigen Konvertierungstabelle KVT1...m entsprechend den angegebenen Konvertierungsvorschriften konvertiert.

FIG 2 zeigt beispielhaft eine Konvertierungstabelle KVTX, die zwei Bearbeitungsaufträge ENTRY1,2 aufweist und folglich eine Eintragsinformation ei=2 enthält. Der Umfang des ersten Eintrags ENTRY1 weist beispielsweise sechs Bytes, d.h. ui=6 und der zweite Bearbeitungseintrag ENTRY2 umfaßt beispielsweise zehn Bytes, d.h. ui=10. Beim ersten Eintrag ENTRY1 sollen ab der Nachrichtenelementeposition acht, d.h. die Offsetinformation psi=8, zwei Nachrichtenelemente n, d.h. uie=2, entfernt werden. Dies bedeutet, daß eine die Bearbeitung anzeigende Information ci eingefügt ist. Eine Korrektur findet nicht statt, d.h. ki=0. Die Korrekturinformation ki zeigt an, inwieweit der Umfang eines zu konvertierendes Nachrichtenelement n mit dem zugehörigen Bearbeitungseintrag bzw. Bearbeitungsauftrag zu korrigieren ist. Ist k>0, so wird die angegebene Nachrichtenposition (8) um den durch die Umfanginformation uie angegebenen Wert erhöht oder erniedrigt. Der zweite Bearbeitungseintrag ENTRY2 enthält neben der vorhergehend erläuterten Information ui zusätzlich eine das Einfügen von Elementen n anzeigende Bearbeiungsinformation si, eine Offsetinformation psi=14, die die Nachrichtenelementenposition 14 anzeigt, an der ein Nachrichtenelement X eingefügt werden soll. Durch die Elementeumfanginformation uie=1 ist angezeigt, daß ein Nachrichtenelement X eingefügt werden soll. Die Korrekturinformation ki=12 zeigt an, daß nach einer Konvertierung der Nachricht das an der zwölften Nachrichtenposition befindliche, eine Teilnachrichtenlänge anzeigende Nachrichtenelement n mit der Information 07 um den Umfang uie des eingefügten Nachrichtenelementes X zu korrigieren ist. Die folgende Funktionsinformation fi und Parameterinformationen pi werden zur Initialisierung des Einfügevorgangs und der einzufügenden Parameter p1.. herangezogen. Beispielhaft wird die in FIG 2 dargestellte Konvertierungstabelle KVTX bei einem Empfang einer zu konvertierenden Nachricht von oben nach unten und bei einem Senden einer zu konvertierenden Nachricht von unten nach oben abgearbeitet. Die Bearbeitungsinformationen si,ci werden hierbei invers verwendet, d.h. eine in einer Tabellenrichtung verwendete Bearbeitungsinformation si,ci, beispielsweise Entfernen eines Nachrichtenelementes n, wird invertiert, d.h. als Einfügen eines Nachrichtenelementes n verwendet.

In FIG 3 ist eine zu konvertierende Nachricht N dargestellt, die durch Bearbeitung der beispielhaften Konvertierungstabelle KVTX nach FIG 2 beim Senden in eine Nachricht NK konvertiert werden soll. Die zu konvertierende Nachricht N weist beispielsweise 19 Nachrichtenelemente n1...19 auf, in die Informationen A' bis J, 07 und K bis Q, beginnend ab dem ersten Nachrichtenelement n1, eingetragen sind. Ein vorgestelltes Nachrichtenelement n0 enthält Informationen über die Nachrichtenlänge, im Ausführungsbeispiel aufgrund von 19 Nachrichtenelementen n1..19 die Zahl 19. Das zwölfte Nachrichtenelement. n12 enthält den Wert 07, der die Anzahl - im Ausführungsbeispiel sieben - der diesem Nachrichtenelement n12 fogenden Nachrichtenelemente n13 bis n19 einer Nachricht N anzeigt.

Wie bereits erläutert, wird die beispielhafte Konvertlerungstabelle KVTX vcn unten nach oben bearbeitet, d.h. der zweite Bearbeitungseintrag ENTRY2 wird zuerst bearbeitet. Hierbei wird an der Nachrichtenelementeposition 14 ein Nachrichtenelement X eingefügt, wodurch die Nachricht N' um ein Nachrichtenelement n15 mit der Information X erweitert wird. Diese teilweise konvertierte Nachricht N' ist in FIG 2 mit N' bezeichnet, wobei in das erste Nachrichtenelement n0 nunmehr die Anzahl von Nachrichtenelemente n1..20 anzeigende Zahl 20 eingefügt ist und die Information bzw. der Wert des an Korrekturposition ki=12 bzw. befindlichen Nachrichtenelementes n12 von 07 um den angegebenen Umfang (uie=1) auf den Wert 08 erhöht ist. Durch den ersten anschließend zu bearbeitenden Bearbeitungsauftrag ENTRY1 werden die ab der Nachrichtenelementeposition 8 folgenden zwei (uie=2) Nachrichtenelemente n8,9 mit der Information G,H entfernt, wodurch die Nachricht NK auf 18 Nachrichtenelemente n1...18 reduziert wird. Als die Nachrichtenlänge anzeigende Information wird in das vorangestellte Nachrichtenelemente n0 die Zahl 18 eingetragen. Die nunmehr vollständig konvertierte Nachricht NK ist ebenfalls in FIG 3 dargestellt.

Bei einer Konvertierung beim Empfang einer Nachricht NK wird die beispielhafte Konvertierungstabelle KVTX von oben nach unten bearbeitet, wobei dann von der konvertierten Nachricht NK über die teilweise konvertierte Nachricht N' zur Nachricht N konvertiert wird. Die angegebenen Bearbeitungsinformationen si,ci werden hierbei, wie bereits erläutert, invers verwendet.

## Patentansprüche

1. Verfahren zum Konvertieren von unterschiedliche Formate aufweisenden Nachrichten (N) in Kommunikationssystemen, wobei die Nachrichten (N) zwischen Kommunikationssystemen übermittelt werden,
wobei bei dem in zumindest einer Konfigurationstabelle (RTAB, ATAB1..n) kommunikationssystemspezifische Informationen (rel a/1..b/2) gespeichert sind,
**dadurch gekennzeichnet,**
- **dass** bei dem in nachrichtenartenindividuellen Konvertierungstabellen (KVT1..m) Konvertierungsvorschriften angegeben sind, und
- **dass** bei dem in den Kommunikationssystemen beim Empfang oder beim Senden einer Nachricht (N) die kommunikationssystemspezifischen Informationen (rel a/1..b/2) der am jeweiligen Nachrichtenaustausch beteiligten Kommunikationssysteme ermittelt und bei unterschiedlichen kommunikationssystemspezifischen Informationen (rel a/1..b/2) mit den in den Konfigurationstabellen (KFT1,2) gespeicherten kommunikationssystemspezifischen Informationen (rel a/1..b/2) in Abhängigkeit von der Art der Nachricht (N) eine Konvertierungstabelle (KVT1..m) ermittelt wird, nach deren Konvertierungsvorschriften die Nachricht (N) konvertiert wird.

2. Verfahren nach Anspruch 1,
**dadurch gekennzeichnet,**
**dass** die kommunkationssystemspezifischen Informationen (rel a/1..b/2) durch eine den Aktualisierungsgrad des jeweiligen Kommunikationssystems anzeigende Releaseinformation (rel a/1..b/2) repräsentiert ist.

3. Verfahren nach Anspruch 1 oder 2,
**dadurch gekennzeichnet,**
- **dass** in einer eine erste Konfigurationstabelle (KFT1) repräsentierende Releasetabelle (RTAB) jeweils einer den Aktualisierungsgrad von Kommunkationssystemen anzeigenden Releaseinformation (rel a/1..b/2) eine erste Tabelleninformation (atab1..n) zugeordnet ist, die jeweils eine zweite Konfigurationstabelle (KFT2) repräsentierende Nachrichtenartentabelle (ATAB1..n) anzeigt,
- **dass** in den Nachrichtenartentabellen (ATAB1..n) jeweils einer den Nachrichtentyp anzeigenden Typeninformation (setup..) eine zweite Tabelleninformation (kvt1..m) zugeordnet ist, die jeweils eine Konvertierungstabelle (KVT1..m) angibt,
- **dass** bei einem Empfang von Nachrichten (N) jeweils die eingefügten Release- und Typeninformationen (rel a/1..b/2) erfaßt sowie beim Senden von Nachrichten (N) die Release- und Typeninformationen (rel a/1..b/2, setup..) des Kommunikationssystems, an das die Nachricht (N) übermittelt wird, ermittelt und mit der des jeweiligen Kommunikationssystems verglichen werden,
- **dass** bei unterschiedlichen Releaseinformationen (rel a/1..b/2) mit der ermittelten Releaseinformation (rel a/1..b/2) in der Releasetabelle (RTAB) die Nachrichtentabelle (ATAB1..n) und
- anschließend mit der Typeninformtion (setup..) in der Nachrichtenartentabelle (ATAB1..n) die Konvertierungstabelle (KVT1..m) ermittelt wird.

4. Verfahren nach einem der Ansprüche 1 bis 3,
**dadurch gekennzeichnet,**
**dass** in den Konvertierungstabellen (KVT1..m) eine die Anzahl der Bearbeitungseinträge (ENTRY1..K) anzeigende Eintragsinformation (ei) angegeben ist und in jeden, Bearbeitungseintrags-Reihenfolge(ENTRY1..K)
- eine den Umfang des Bearbeitungseintrages (ENTRY1..K) anzeigende Mengeninformation (ui),
- eine ein Einfügen eines zusätzlichen Nachrichtenelementes (n) einer Nachricht (N) oder ein Entfernen eines Narichtenelementes (n) einer Nachricht (N) bewirkende Bearbeitungsinformation (ci,si),
- eine die zu bearbeitende Nachrichtenelementeposition (8,14) in der Nachricht (N) anzeigende Offsetinformation (psi),
- eine den Umfang einzufügender oder zu entfernender Nachrichenelemente (n) anzeigende Elementeumfanginformation (uie),
- eine die Nachrichtenelementeposition (8,14) korrigierende Korrekturinformation (ki),
- eine an der Nachrichtenelementeposition (8,14) eine Einfügefunktion initialisierende Funktionsinformation (fi) und
- mit Hilfe der Einfügefunktion einzufügende Parameterinformationen (pi..) eingetragen ist.

5. Verfahren nach Anspruch 4,
**dadurch gekennzeichnet,**
**dass** die Reihenfolge der Bearbeitungseinträge (ENTRY1..k) der Reihenfolge der zu bearbeitenden Nachrichtenelementepositionen (8,14) entspricht.

6. Verfahren nach einem der vorhergenden Ansprüche,
**dadurch gekennzeichnet,**
**dass** die Konvertierungstabellen (KVT1..m) derart strukturiert sind, dass die jeweilige Konvertierungstabelle (KVT1..m) beim Senden einer zu konvertierenden Nachricht (N) in einer Tabellenrichtung und beim Empfangen einer zu konvertierenden Nachricht (N) in der entgegengesetzten Tabellenrichtung abgearbeitet wird, wobei bei der Abarbeitung in entgegengesetzter Tabellenrichtung die Bearbeitungsinformationen konvertiert werden.

7. Verfahren nach einem der vorhergehenden Ansprüche,
**dadurch gekennzeichnet,**
**dass** zum Konvertieren einer zu sendenden oder zu empfangenen Nachricht (N) unterschiedliche Konvertierungstabellen (KVT1..m) vorgesehen sind, wobei die Konvertierungstabellen (KVT1..m) in entgegengesetzten Tabellenrichtungen abgearbeitet werden.

## Claims

1. Method for converting messages (N) having different formats in communications systems, whereby the messages (N) are transferred between communications systems,
whereby communications-system-specific information (rel a/1...b/2) is stored in at least one configuration table (RTAB, ATAB1..n),
**characterized in that**
- conversion rules are indicated in message-type-individual conversion tables (KVT1..m), and,
- in the communications systems, during reception or during transmission of a message (N), the communications-system-specific information (rel a/1..b/2) of the communications systems participating in the respective message exchange is determined and, in the case of different communications-system-specific information (rel a/1..b/2), a conversion table (KVT1..m), according to whose conversion rules the message (N) is converted, is determined with the communications-system-specific information (rel a/1..b/2) stored in the configuration tables (KFT1,2), depending on the type of the message (N).

2. Method according to Claim 1,
**characterized in that**
the communications-system-specific information (rel a/1..b/2) is represented by release information (rel a/1..b/2) indicating the update level of the respective communications system.

3. Method according to Claim 1 or 2,
**characterized in that**
- in a release table (RTAB) representing a first configuration table (KFT1), first table information (atab1..n) is allocated in each case to release information (rel a/1..b/2) indicating the update level of communications systems, in each case indicating a message type table (ATAB1..n) representing a second configuration table (KFT2),
- in the message type tables (ATAB1..n), second table information (kvt1..m), in each case indicating a conversion table (KVT1..m) is allocated in each case to type information (setup..) indicating the message type,
- during reception of messages (N), the inserted release and type information (rel a/1..b/2) is recorded, and, during transmission of messages (N), the release and type information (rel a/1..b/2, setup) of the communications system to which the message (N) is transferred, is determined and compared with that of the respective communications system,
- in the case of different release information (rel a/1..b/2), the message table (ATAB1..n) is determined in the release table (RTAB) with the determined release information (rel a/1..b/2), and,
- the conversion table (KVT1..m) is then determined with the type information (setup..) in the message type table (ATAB1..n).

4. Method according to one of Claims 1 to 3,
**characterized in that**,
entry information (ei) indicating the number of processing entries (ENTRY1..K) is indicated in the conversion tables (KVT1..m), and
- quantity information (ui) indicating the scope of the processing entry (ENTRY1..K),
- processing information (ci,si) effecting an insertion of an additional message element (n) of a message (N) or a removal of a message element (n) of a message (N),
- offset information (psi) indicating the message element position (8, 14) to be processed in the message (N),
- element scope information (uie) indicating the scope of message elements (n) to be inserted or removed,
- correction information (ki) correcting the message element position (8, 14),
- function information (fi) initializing an insertion function at the message element position (8, 14), and
- parameter information (pi) to be inserted with the aid of the insertion function are recorded in each processing entry sequence (ENTRY1..K).

5. Method according to Claim 4,
**characterized in that**
the sequence of the processing entries (ENTRY1..k) corresponds to the sequence of the message element positions (8, 14) to be processed.

6. Method according to one of the preceding claims,
**characterized in that**
the conversion tables (KVT1..m) are structured in such a way that the respective conversion table (KVT1..m) is processed in one table direction during transmission of a message (N) to be converted, and is processed in the opposite direction during reception of a message (N) to be converted, whereby the processing information is converted in the case of processing in the opposite table direction.

7. Method according to one of the preceding claims,
**characterized in that**,
for the conversion of a message (N) to be transmitted or received, different conversion tables (KVT1..m) are provided, whereby the conversion tables (KVT1..m) are processed in opposite table directions.

## Revendications

1. Procédé pour la conversion de messages (N), ayant des formats différents, dans des systèmes de communication, les messages (N) étant transmis entre des systèmes de communication,
dans lequel des informations (rel a/1 ... b/2) spécifiques au système de communication sont mémorisées dans au moins un tableau de configuration (RTAB, ATAB1 ... n),
**caractérisé par le fait que**
- des règles de conversion sont indiquées dans des tableaux de conversion (KVT1 ... m) propres au type de message, et
- dans les systèmes de communication, on détermine lors de la réception ou de l'émission d'un message (N) les informations spécifiques au système de communication (rel a/1 ... b/2) des systèmes de communication participant à l'échange de messages respectif et, en présence d'informations spécifiques au système de communication (rel a/1 ... b/2) différentes, on détermine avec les informations spécifiques au système de communication (rel a/1 ... b/2) mémorisées dans les tableaux de configuration (KFT1, 2) et en fonction du type du message (N) un tableau de conversion (KVT1 ... m) selon les règles de conversion duquel le message (N) est converti.

2. Procédé selon la revendication 1,
**caractérisé par le fait que**
les informations spécifiques au système de communication (rel a/1 ... b/2) sont représentées par une information de version (rel a/1 ... b/2) indiquant le degré d'actualisation du système de communication respectif.

3. Procédé selon la revendication 1 ou 2,
**caractérisé par le fait que**
- dans un tableau de version (RTAB) représentant un premier tableau de configuration (KFT1), il est associé à chaque information de version (rel a/1 ... b/2) indiquant le degré d'actualisation de systèmes de communication une première information de tableau (atab1 ... n) qui indique à chaque fois un tableau de types de messages (ATAB1 ... n) représentant un deuxième tableau de configuration (KFT2),
- dans les tableaux de types de messages (ATAB1 ... n), il est associé à chaque information de type (setup ...) indiquant le type de message une deuxième information de tableau (kvt1 ... m) qui indique à chaque fois un tableau de conversion (KVT1 ... m),
- lors d'une réception de messages (N), on détecte à chaque fois les informations de version et de type insérées (rel a/1 ... b/2) et, lors de l'émission de messages (N), on détermine les informations de version et de type (rel a/1 ... b/2, setup ...) du système de communication auquel le message (N) est transmis et on les compare à celles du système de communication respectif,
- en présence d'informations de version (rel a/1 ... b/2) différentes, on détermine avec l'information de version déterminée (rel a/1 ... b/2) dans le tableau de version (RTAB) le tableau de types de messages (ATAB1 ... n),
- puis on détermine avec l'information de type (setup ...) dans le tableau de types de messages (ATAB1 ... n) le tableau de conversion (KVT1 ... m).

4. Procédé selon l'une des revendications 1 à 3,
**caractérisé par le fait que**,
dans les tableaux de conversion (KVT1 ... m), il y a une information d'enregistrement (ei) indiquant le nombre des enregistrements de traitement (ENTRY1 ... K) et il est enregistré pour chaque enregistrement de traitement (ENTRY1 ... K) :
- une information de quantité (ui) indiquant le volume de l'enregistrement de traitement (ENTRY1 ... K),
- une information de traitement (ci, si) provoquant l'insertion d'un élément de message supplémentaire (n) d'un message (N) ou la suppression d'un élément de message (n) d'un message (N),
- une information de décalage (psi) indiquant la position d'éléments de message à traiter (8, 14) dans le message (N),
- une information de volume d'éléments (uie) indiquant le volume d'éléments de message (n) à insérer ou à supprimer,
- une information de correction (ki) corrigeant la position d'éléments de message (8, 14),
- une information de fonction (fi) initialisant une fonction d'insertion à la position d'éléments de message (8, 14), et
- des informations de paramètres (pi ...) à insérer à l'aide de la fonction d'insertion.

5. Procédé selon la revendication 4,
**caractérisé par le fait que**
l'ordre des enregistrements de traitement (ENTRY1 ... K) correspond à l'ordre des positions d'éléments de message (8, 14) à traiter.

6. Procédé selon l'une des revendications précédentes,
**caractérisé par le fait que**
les tableaux de conversion (KVT1 ... m) sont structurés de telle sorte que le tableau de conversion respectif (KVT1 ... m) est exécuté dans un sens de tableau lors de l'émission d'un message à convertir (N) et est exécuté dans le sens de tableau opposé lors de la réception d'un message à convertir (N), les informations de traitement étant converties lors de l'exécution dans le sens de tableau opposé.

7. Procédé selon l'une des revendications précédentes,
**caractérisé par le fait que**,
pour la conversion d'un message à émettre ou à recevoir (N), il est prévu des tableaux de conversion (KVT1 ... m) différents, les tableaux de conversion (KVT1 ... m) étant exécutés dans des sens de tableau opposés.
